# EUROPÄISCHE PATENTSCHRIFT

(11) **EP 2 369 965 B1**
(45) Veröffentlichungstag und Bekanntmachung des Hinweises auf die Patenterteilung: **09.01.2013**
(21) Anmeldenummer: 09751823.7
(22) Anmeldetag: 04.11.2009
(51) Int. Cl.: A47J 37/06

(54) **MITTELARM ZUR AUFNAHME EINER KONTAKTGRILL- ODER BRATOBERPLATTE SOWIE KONTAKTGRILL- ODER- BRATGERÄT MIT EINEM SOLCHEN MITTELARM**
MIDDLE ARM FOR ASSEMBLING A CONTACT GRILL OR ROASTING UPPER PLATE AND CONTACT GRILL OR ROASTING DEVICE WITH SUCH A MIDDLE ARM
BRAS CENTRAL DESTINÉ À MAINTENIR UNE PLAQUE SUPÉRIEURE DE GRIL DOUBLE OU UNE PLAQUE SUPÉRIEURE DE CUISSON ET GRIL DOUBLE OU APPAREIL DE CUISSON ÉQUIPÉ DE CE BRAS CENTRAL

(30) Priorität: 05.11.2008 DE 102008056475
(43) Veröffentlichungstag der Anmeldung: 05.10.2011
(73) Patentinhaber: H.H. Scholz KG, 22143 Hamburg (DE)
(72) Erfinder: SCHOLZ, Kay, 22143 Hamburg (DE); LANGGUTH, Otto, 22889 Tangstedt (DE); ANKLAM, Karsten, 22941 Bargteheide (DE)
(74) Vertreter: Stork Bamberger
(86) Internationale Anmeldenummer: PCT/EP2009/008053
(87) Internationale Veröffentlichungsnummer: WO 2010/052024

(56) Entgegenhaltungen:
- EP-A1- 0 662 299
- US-A- 5 423 253

## Beschreibung

Die Erfindung betrifft einen Mittelarm zur Aufnahme einer Kontaktgrill- oder Bratoberplatte, wobei der Mittelarm einen im Wesentlichen vertikalen Stützabschnitt und einen schwenkbar am vertikalen Stützabschnitt angeordneten Halteabschnitt, an dem die Kontaktgrill- oder Bratoberplatte befestigbar ist, aufweist, und in dem Halteabschnitt eine Einrichtung zur Gewichtsentlastung für die dem Halteabschnitt zuzuordnende Kontaktgrill- oder Bratoberplatte angeordnet ist, wobei die Einrichtung zur Gewichtsentlastung mindestens ein an einem Ende zur schwenkbaren Lagerung ausgebildetes und eingerichtetes Führungsmittel, auf dem ein Schiebeelement bewegbar angeordnet ist, ein auf dem freien Ende des Führungsmittels angeordnetes und durch ein Anschlagmittel zwischen dem Schiebeelement und dem Anschlagmittel gesichertes Rückstellelement, sowie eine mittels eines Betätigungselementes bedienbare Verstelleinrichtung zur Veränderung des Abstands zwischen dem Schiebeelement und dem Anschlagmittel in Längsrichtung des Führungsmittels, umfasst. Des Weiteren betrifft die Erfindung ein Kontaktgrill- oder Bratgerät mit mindestens einer Kontaktgrill- oder Bratoberplatte und Kontaktgrill- oder Bratunterplatte, wobei die oder jede Kontaktgrill- oder Bratoberplatte über einen Mittelarm schwenkbar an der Kontaktgrill- oder Bratunterplatte angeordnet ist.

Solche Mittelarme kommen im Bereich von Kontaktgrill- oder Bratgeräten mit mindestens zwei zur Anlage am Grill- oder Bratgut bestimmten Kontaktplatten zum Einsatz. Solche Kontaktgrill- oder Bratgeräte sind in der Praxis allgemein bekannt und umfassen eine Kontaktgrill- oder Bratoberplatten und eine Kontaktgrill- oder Bratunterplatte, wobei die Kontaktgrill- oder Bratoberplatte über einen Mittelarm schwenkbar an der Kontaktgrill- oder Bratunterplatte angelenkt ist. Beiden Kontaktplatten ist eine die elektrische Schaltung aufnehmende Einheit mit entsprechenden Bedienelementen zugeordnet, wobei die Einheit üblicherweise unterhalb der beiden Kontaktplatten angeordnet ist. Der Mittelarm ist üblicherweise zweigeteilt. Anders ausgedrückt ist ein Mittelarmelement im Bereich der Kontaktgrill- oder Bratunterplatte fest angeordnet. Ein zweites Mittelarmelement ist schwenkbar an dem ersten Mittelarmelement angeordnet und trägt die Kontaktgrill- oder Bratoberplatte. Im Bereich des Mittelarms ist üblicherweise mindestens eine Einrichtung zur Gewichtsentlastung für die Kontaktgrill- oder Bratoberplatte vorgesehen. Eine solche Einrichtung zur Gewichtsentlastung, nämlich eine zur Feineinstellung der Gewichtsentlastung, ist im schwenkbaren, die Kontaktgrill- oder Bratoberplatte tragenden Mittelarmelement angeordnet.

Üblicherweise ist mindestens die Einrichtung zur Gewichtsentlastung für die Feineinstellung in dem schwenkbaren Mittelarmelement einstellbar. Dazu weist die Einrichtung zur Gewichtsentlastung ein Betätigungselement auf. Ein Mittelarm mit einer solchen Einrichtung zur einstellbaren Gewichtsentlastung ist z.B. aus der EP 0 662 299 B1 bekannt. Die darin beschriebene einstellbare Gewichtsentlastung ist in dem verschwenkbaren Mittelarmteil angeordnet. Die Einrichtung umfasst eine Stange, die außerhalb der Schwenkachse des schwenkbaren Mittelarmelementes an dem feststehenden Mittelarmelement gelagert ist. Auf der Stange ist ein Schiebeelement angeordnet, das zur Verstellung des Schiebeelementes über eine Druckfeder mittels einer Schraubverbindung und einer Lagerbuchse mit einem Stellknopf als Betätigungselement verbunden ist. Um die Bohrung für den Stellknopf herum, also die nach oben gerichtete Öffnung in dem Mittelarmelement zum Durchtritt des Stellknopfes bzw. der Lagerbuchse von außen in das Innere des Mittelarmelementes, ist ein Lochkreis gebildet, in dessen einzelne Löcher ein am Stellknopf befindlicher Stift einrasten kann. Durch Zug am Stellknopf wird der Stift aus dem jeweiligen Loch des Lochkreises gezogen und durch eine Drehbewegung des Stellknopfes in ein anderes Loch eingerastet. Durch die Drehung des Stellknopfes verschiebt sich das Schiebeelement über die Verstelleinrichtung auf der Stange, da das Schiebeelement außerhalb der Mittelpunktsachse des Stellknopfes mit diesem verbunden ist. Auf dem der Lagerung der Stange gegenüber liegenden Ende der Stange ist ein Federelement angeordnet und über einen Anschlag auf der Stange gehalten. Bei geöffneter Stellung der Kontaktgrill- oder Bratoberplatte ist der Abstand zwischen dem Schiebeelement und dem Anschlag aufgrund der unterschiedlichen bzw. versetzt zueinander liegenden Schwenkachsen auf der Stange am größten. Beim Absenken der Kontaktgrill- oder Bratoberplatte in Richtung der Kontaktgrill- oder Bratunterplatte verringert sich der Abstand zwischen dem Schiebeelement und dem Anschlag, bis das Schiebeelement an dem Federelement zum Anschlag kommt, so dass eine Druckkraft aufgebaut wird, die dem weiteren Absenken des Mittelarmelementes und damit der Kontaktgrill- oder Bratoberplatte entgegen wirkt. In Abhängigkeit der Stellung des Stellknopfes und damit der Position des Schiebeelementes auf der Stange lässt sich die Druckkraft variieren.

Die aus dem Stand der Technik bekannte Ausbildung der Verstelleinrichtung, die quer zur Längsachse des Führungsmittels ausgerichtet ist, weist jedoch zum einen den Nachteil auf, dass sie konstruktiv aufwendig ist. Zum anderen ist für das Betätigungselement bzw. die Lagerbuchse als Bestandteil der Verstelleinrichtung ein Durchbruch, nämlich eine Öffnung mit einem Lochkreis, auf der Oberseite des Mittelarmelementes notwendig, was einerseits die Gefahr von Verschmutzungen innerhalb des Mittelarmelementes erhöht und andererseits den Reinigungsprozess des Mittelarmelementes von außen erschwert. Anders ausgedrückt ist die bekannte Vorrichtung zur Gewichtsentlastung unter hygienischen Aspekten unzureichend. Auch ist die Handhabung des Betätigungselementes zur Einstellung der Gewichtsentlastung umständlich und unpräzise und erlaubt nur einen geringen Verstellweg.

Es ist daher Aufgabe der vorliegenden Erfindung, einen unter Hygieneaspekten verbesserten Mittelarm mit einer Einrichtung zur Gewichtsentlastung zu schaffen, der eine präzise und einfache Einstellung der Gewichtsentlastung gewährleistet. Des Weiteren ist es Aufgabe der Erfindung, ein entsprechendes Kontaktgrillgerät vorzuschlagen.

Diese Aufgabe wird durch einen Mittelarm der eingangs genannten Art dadurch gelöst, dass die Verstelleinrichtung ein Steuerprofilelement umfasst, das ein Steuerprofil zur Herbeiführung einer Axialbewegung des Schiebeelementes in Längsrichtung des Führungsmittels aufweist. Mit dieser erfindungsgemäßen Ausbildung wird einerseits erreicht, dass eine Verlagerung des Betätigungselementes von der Oberseite an die Stirnseite des Mittelarms dazu führt, eine geschlossene Oberseite des Mittelarms zu schaffen, so dass ein Eindringen von Fett, Wrasen oder dergleichen verhindert und ein einfaches Reinigen gewährleistet wird. Andererseits ermöglicht das als Verstellkrone oder Kronenführung bezeichnete Steuerprofilelement eine sichere und einfache Verstellung.

Eine zweckmäßige Weiterbildung zeichnet sich dadurch aus, dass das Steuerprofilelement ein Stufenelement mit mindestens zwei Raststufen ist, wobei die Raststufen in Längsrichtung des Führungsmittels axial versetzt zueinander sind. Anders ausgedrückt weist das Stufenelement mindestens zwei Stellpositionen auf, die ausgehend vom Betätigungselement radial versetzt und hintereinander liegen. Mit der erfindungsgemäßen Ausbildung kann zum einen eine Reduzierung der tatsächlich notwendigen Stellpositionen und zum anderen eine saubere Trennung der wesentlichen Stellpositionen erreicht werden. Dadurch werden die Zuverlässigkeit und die Handhabung vereinfacht.

Vorteilhafterweise umfasst das Führungsmittel zwei Führungsstangen, so dass das Schiebeelement auf zwei Führungsstangen geführt ist. Damit werden die Funktionalität und Zuverlässigkeit der Einrichtung zur Gewichtsentlastung insbesondere in Bezug auf die Handhabung verbessert.

Eine besonders bevorzugte Ausführungsform ist dadurch gekennzeichnet, dass der Mittelarm mit einer Kontaktgrill- oder Bratoberplatte versehen ist. Mit dieser Kombination ist ein eigenständiges Grill- bzw. Bratgerät geschaffen, dass einfach zu reinigen und leicht zu handhaben ist.

Die Aufgabe wird auch durch ein Kontaktgrillgerät mit den eingangs genannten Merkmalen dadurch gelöst, dass der Mittelarm nach einem der Ansprüche 1 bis 13 ausgebildet ist. Die sich daraus ergebenden Vorteile wurden bereits weiter oben erwähnt, so dass zur Vermeidung von Wiederholungen auf die entsprechenden Passagen verwiesen wird.

Weitere zweckmäßige und/oder vorteilhafte Merkmale und Weiterbildungen der Erfindung ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine Explosionsdarstellung eines erfindungsgemäßen Mittelarms,
- Fig. 2: eine Explosionsdarstellung eines eine Kontaktgrill- oder Bratoberplatte tragenden Mittelarms,

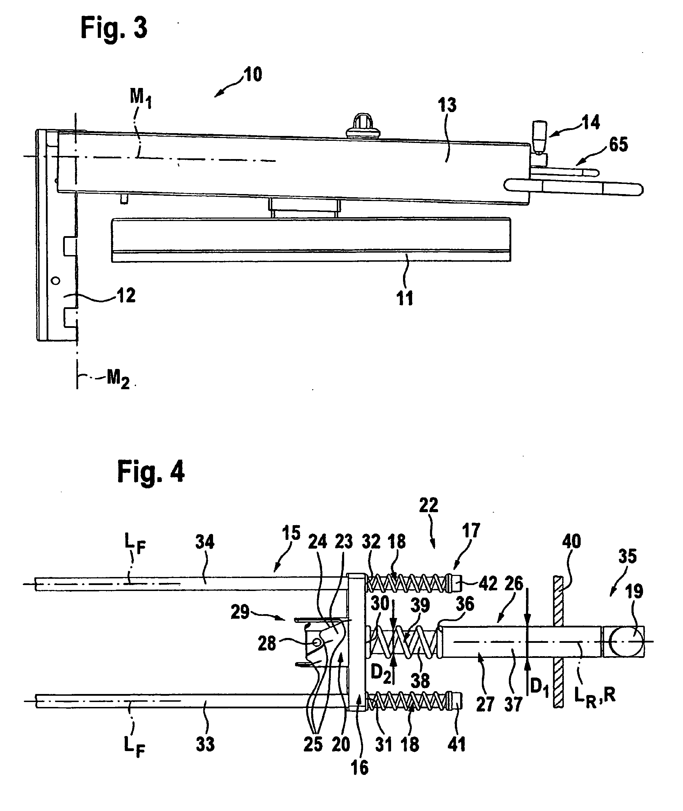

- Fig. 3: eine Seitenansicht eines Mittelarms mit Kontaktgrill- oder Bratoberplatte,
- Fig. 4: eine vergrößerte Darstellung der Einrichtung zur Gewichtsentlastung,

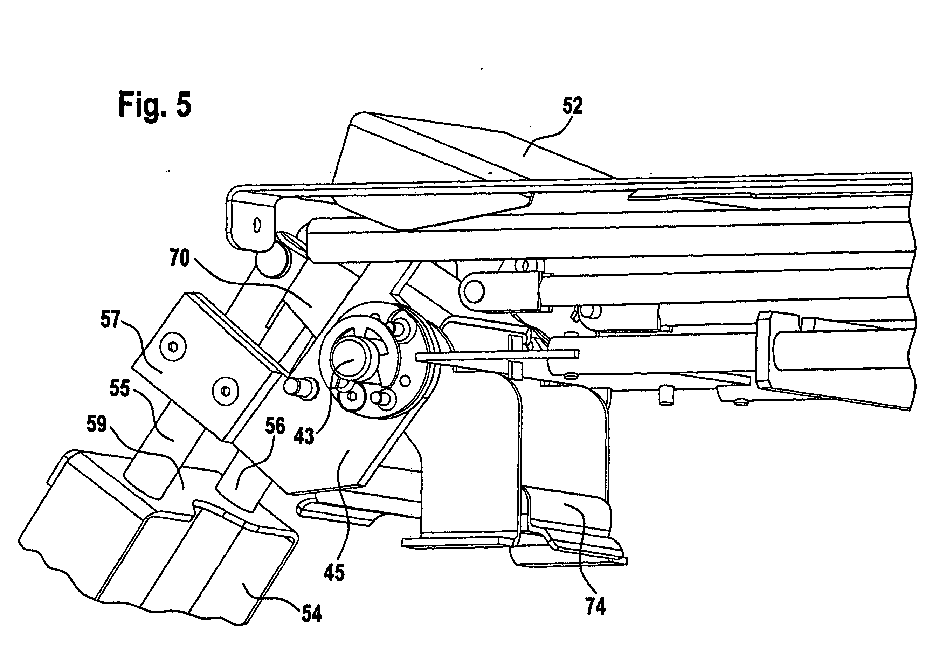

- Fig. 5: eine perspektivische Darstellung des Schwenkbereichs des Mittelarms von schräg vorne,

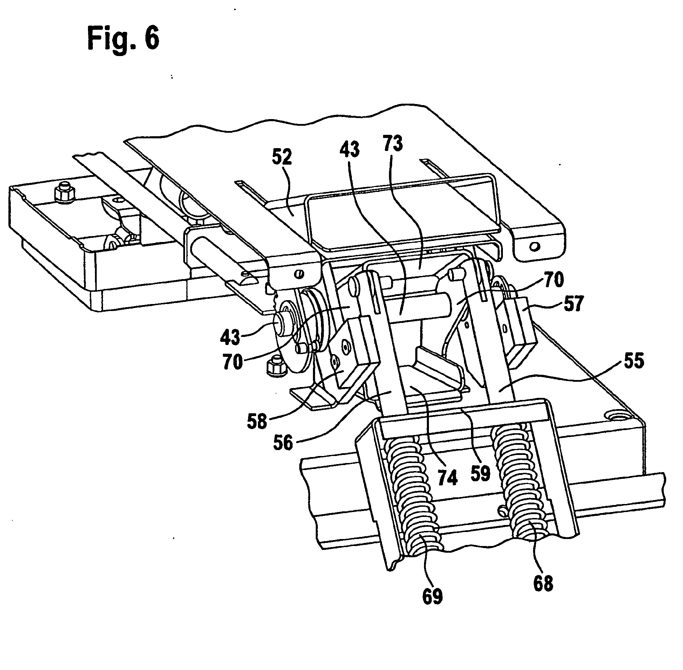

- Fig. 6: eine perspektivische Darstellung des Schwenkbereichs des Mittelarms von schräg hinten,
- Fig. 7: ein Kontaktgrill- oder Bratgerät mit Kontaktgrill- oder Bratunter- und oberplatte, und
- Fig. 8: eine Rückansicht eines Kontaktgrill- oder Bratgeräts mit einer Kontaktgrill- oder Bratunterplatte und zwei Kontaktgrill- oder Bratoberplatten in aufgeklapptem Zustand.

Der in den Figuren dargestellte Mittelarm dient als Nachrüstsatz bzw. in Verbindung mit einer Kontaktgrill- oder Bratoberplatte als eigenständiges Grill- oder Bratgerät und kann für sich alleine oder in Kombination mit einer Kontaktgrill- oder Bratunterplatte zur Bildung eines Kontaktgrill- oder Bratgerätes eingesetzt werden.

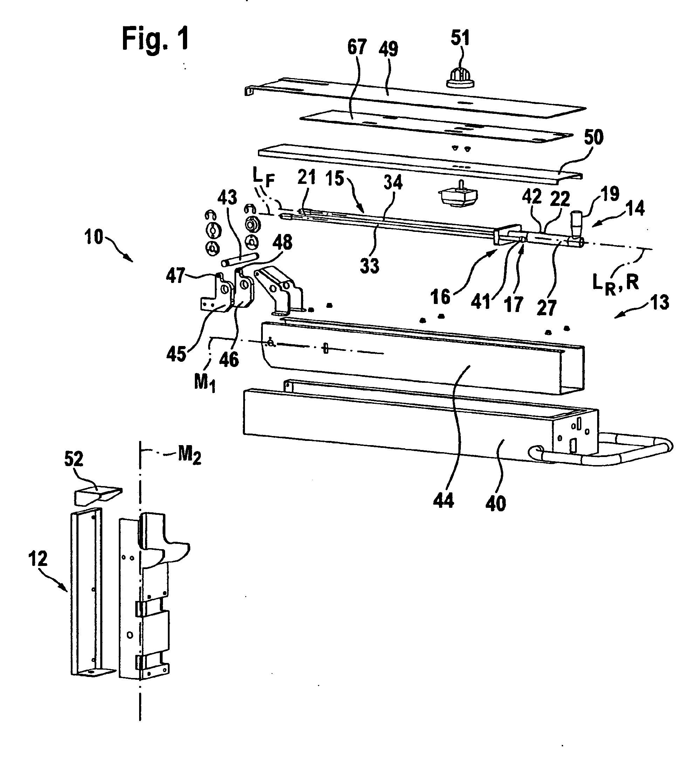

Die Figur 1 zeigt eine auseinander gezogene Darstellung eines Mittelarms 10, der zur Aufnahme einer Kontaktgrill- oder Bratoberplatte 11 ausgebildet und eingerichtet ist. Der Mittelarm 10 besteht im Wesentlichen aus einem vertikalen Stützabschnitt 12 und einem schwenkbar am Stützabschnitt 12 angeordneten Halteabschnitt 13. Die Bezeichnung "vertikaler Stützabschnitt 12" bedeutet, dass der Stützabschnitt 12 senkrecht zu einer üblicherweise durch einen Tisch, eine Unterlage oder dergleichen aufgespannten Ebene E ausgerichtet ist, wobei ausdrücklich auch eine leicht gegenüber der Senkrechten geneigte Ausrichtung eingeschlossen ist. An dem Halteabschnitt 13 ist die Kontaktgrill- oder Bratoberplatte 11 befestigbar. Dem Halteabschnitt 13 ist eine Einrichtung 14 zur Gewichtsentlastung für die dem Halteabschnitt 13 zuzuordnende Kontaktgrill- oder Bratoberplatte 11 zugeordnet, wobei die Einrichtung 14 zur Gewichtsentlastung vorzugsweise vollständig innerhalb des Halteabschnitts 13 angeordnet ist.

Die Einrichtung 14 zur Gewichtsentlastung umfasst im Wesentlichen ein Führungsmittel 15, ein Schiebeelement 16, ein Anschlagmittel 17, ein Rückstellelement 18, ein Betätigungselement 19 sowie eine Verstelleinrichtung 20. Das Führungsmittel 15 ist an einem Ende 21 zur schwenkbaren Lagerung (siehe hierzu weiter unten) ausgebildet und eingerichtet. Das Schiebeelement 16 ist auf dem Führungsmittel 15 bewegbar, nämlich z.B. gleitend hin und her bewegbar. An dem der Lagerung gegenüber liegenden Ende 22 des Führungsmittels 15 ist das Anschlagmittel 17 vorgesehen. Zwischen dem Anschlagmittel 17 und dem Schiebeelement 16 ist auf dem Führungsmittel 15 das Rückstellelement 18 angeordnet. Zur Bewegung des Schiebeelementes 16 und damit zur Veränderung des Abstands zwischen dem Schiebeelement 16 und dem Anschlagmittel 17 ist die Verstelleinrichtung 20 vorgesehen, die über das Betätigungselement 19 bedienbar ist.

Die Verstelleinrichtung 20 umfasst ein Steuerprofilelement 23, das ein Steuerprofil zur Herbeiführung einer Axialbewegung des Schiebeelementes 16 in axialer Längsrichtung des Führungsmittels 15 aufweist. Das Steuerprofil weist bevorzugt eine in Axialrichtung des Führungsmittels 15 verlaufende Steuerkurve 24 auf. Optional kann das Steuerprofil auch eine Schräge oder anders ausgebildete Ausnehmung oder dergleichen sein. Besonders bevorzugt ist das Steuerprofilelement 23 ein als Verstellkrone oder Kronenführung ausgebildetes Stufenelement mit mindestens zwei, vorzugsweise jedoch drei Raststufen 25, wobei die Raststufen 25 in Längsrichtung des Führungsmittels 15 axial versetzt zueinander sind. Zusätzlich sind die Raststufen 25 auch radial versetzt zueinander, so dass die Raststufen 25 quasi nebeneinander und hintereinander liegen. Die Anzahl der Raststufen 25 kann auch variieren und insbesondere mehr als drei betragen.

Die Verstelleinrichtung 20 umfasst des Weiteren eine Fixiereinrichtung 26, die vorzugsweise aus einer Raststange 27 und mindestens einem Rastbolzen 28 besteht. Der Rastbolzen 28 korrespondiert zu den Raststufen 25 des Steuerprofilelementes 23 bzw. des Stufenelementes und ist mit diesen in Eingriff und außer Eingriff bringbar. Der Rastbolzen 25 ist im Bereich eines freien Endes 29 der Raststange 27 angeordnet und erstreckt sich vorzugsweise senkrecht zur Mantelfläche der bevorzugt zylinderförmigen Raststange 27.

Das Steuerprofilelement 23 bzw. das Stufenelement ist vorzugsweise rohrförmig ausgebildet und fest mit dem Schiebeelement 16 verbunden. Anders ausgedrückt bilden das Schiebeelement 16 und das Stufenelement eine auf dem Führungsmittel 15 bewegbare Einheit. Das Schiebeelement 16 weist eine zentrale Öffnung 30 zum Durchtritt der Raststange 27 auf. Die zentrale Öffnung 30 des Schiebeelementes 16 ist fluchtend zur Öffnung bzw. zum Durchgang des rohrförmigen Stufenelementes, so dass die Raststange 27 durch die Einheit aus Stufenelement und Schiebeelement 16 durchschiebbar ist. Zusätzlich zur zentralen Öffnung 30 weist das Schiebeelement 16 zwei weitere Öffnungen 31, 32 auf. Diese Öffnungen 31, 32 dienen zum Durchtritt von zwei das Führungsmittel 15 bildenden Führungsstangen 33, 34. Mit anderen Worten ist das Schiebeelement 16 auf zwei Führungsstangen 33, 34 bewegbar, nämlich z.B. gleitend angeordnet.

Wie bereits erwähnt, ist die Raststange 27 durch die aus Schiebeelement 16 und Stufenelement gebildete Einheit hindurch geführt, derart, dass sich die Längsachse L_{R} der Raststange 27 etwa parallel zur Längsachse L_{F} der Führungsstangen 33, 34 erstreckt. Das den Rastbolzen 28 aufweisende freie Ende 29 der Raststange 27 befindet sich dabei auf der dem Schiebeelement 16 abgewandten Seite des Stufenelementes. Die Raststange 27 ist an dem dem freien Ende 29 gegenüber liegenden Ende 35 an einem Gehäuse 40 oder an anderer geeigneter Position drehbar gelagert. Die Raststange 27 ist des Weiteren unter Bildung eines Anschlags 36 gestuft ausgebildet. Anders ausgedrückt ist die Raststange 27 in ihrer Längserstreckung mit unterschiedlichen Durchmessern ausgebildet. Das bedeutet, dass die Raststange 27 einen ersten Abschnitt 37 mit einem Durchmesser D₁ und einen zweiten Abschnitte 38 mit einem Durchmesser D₂ aufweist, wobei D₁>D₂. Durch den Durchmesserunterschied der einzelnen Abschnitte 37, 38 ist ein Absatz gebildet, der den Anschlag 36 darstellt.

Auf einem der Abschnitte, nämlich auf dem Abschnitt 38 mit dem kleineren Durchmesser D2, ist ein Federelement 39 angeordnet. Gesichert ist das Federelement 39 dadurch, dass es zwischen dem Anschlag 36 und dem Schiebeelement 16 angeordnet ist. Wie bereits beschrieben, ist die Raststange 27 einerseits durch die Lagerung im Schiebeelement 16 und andererseits im Bereich des Gehäuses 40 zur drehbaren Lagerung ausgebildet und eingerichtet. An dem aus dem Gehäuse 40 oder dergleichen ragenden Ende 35 der Raststange 27 (das Ende 35 kann auch bündig mit dem Gehäuse 40 abschließen oder sogar innerhalb des Gehäuses 40 enden) ist als Betätigungselement 19 ein Bedienhebel zur Ausübung einer Drehbewegung der Raststange 27 um eine Drehachse R angeordnet bzw. befestigt. Die Drehachse R verläuft parallel zur Längsachse des Führungsmittels 15 bzw. der Längsachsen L_{F} der Führungsstangen 33, 34 und entspricht der Längsachse L_{R} der Raststange 27.

In der beschriebenen und bevorzugten Ausführungsform ist das Führungsmittel 15 aus zwei Führungsstangen 33, 34 gebildet. Die Führungsstangen 33, 34 weisen an ihrem jeweils freien Ende 22, das dem Betätigungselement 19 zugewandt ist, einen Stopper 41, 42 als Anschlagmittel 17 auf. Der Stopper 41, 42 kann eine Materialverdickung, ein Schraubenkopf oder jede andere geeignete Komponente sein. Zwischen dem Schiebeelement 16 und dem jeweiligen Stopper 41, 42 ist als Rückstellelement 18 ein Federelement vorgesehen. Als Rückstellelement 18 sind jedoch auch andere geeignete Komponenten einsetzbar. Grundsätzlich sind alle Federelemente 39 und/oder Rückstellelemente 18 austauschbar. Bevorzugt sind Druckfedern als Federelemente 39 und Rückstellelement 18 eingesetzt. Es können Federelemente 39 und Rückstellelemente 18 mit unterschiedlichen Federgewichten zum Halten bzw. Tragen von Kontaktgrill- oder Bratoberplatten 11 mit unterschiedlichem Gewicht eingesetzt werden.

In der in Figur 1 dargestellten Ausführungsform ist der Halteabschnitt 13 über eine Achse 43 schwenkbar mit dem Stützabschnitt 12 verbunden. Die Achse 43 ist in einem Innengehäuse 44 und/oder dem Gehäuse 40 am Halteabschnitt 13 gelagert. Die Schwenkachse 43 des Halteabschnitts 13 ist vorzugsweise etwa im Schnittpunkt der Mittelachsen M₁ des Halteabschnitts 13 einerseits und M₂ des Stützabschnitts 12 andererseits ausgebildet bzw. angeordnet. Anders ausgedrückt ist die Schwenkachse 43 in Bezug auf den Anlenkpunkt zwischen Stützabschnitt 12 und Halteabschnitt 13 zentral angeordnet. Die Anordnung bzw. Platzierung der Schwenkachse 43 ist aber variabel und kann abweichend von der zuvor beschriebenen Position am Halteabschnitt 13 auch am Stützabschnitt 12 erfolgen. Die Führungsstangen 33, 34 des Führungsmittels 15 sind an ihrem Ende 21, das dem Betätigungselement 19 gegenüber liegt, an Lagerarmen 45, 46 gelagert. Die beabstandet zu einander angeordneten Lagerarme 45, 46 sind auf der Schwenkachse 43 angeordnet und weisen Vorsprünge 47, 48 auf, an denen die Führungsstangen 33, 34 befestigt sind. Des Weiteren können den Lagerarmen 45, 46 jeweils nach außen gerichtet Distanzstücke 57, 58 zugeordnet sein. Die Distanzstücke 57, 58 sind zum Austausch lösbar an den Lagerarme 45, 46 befestigt. Die Lagerarme 45, 46 mit den Distanzstücken 57, 58 sind innerhalb des Innengehäuses 44 geführt.

Durch das Innengehäuse 44 werden innerhalb des Gehäuses 40 des Halteabschnittes 13 Kanäle gebildet. Anders ausgedrückt wird der Innenraum des Gehäuses 40 durch das Innengehäuse 44 in mehrere getrennt voneinander liegende Kammern getrennt. Das Gehäuse 40 wird nach außen durch einen Deckel 49 geschlossen. Dieser Deckel 49 schließt auch das Innengehäuse 44. Das Innengehäuse 44 kann zusätzlich einen eigenen Deckel 50 aufweisen. Optional kann zwischen dem Deckel 49 für das Gehäuse 40 und dem Deckel 50 für das Innengehäuse 44 ein Rastblech 67 oder dergleichen angeordnet sein. Sowohl die Deckel 49, 50 als auch das Rastblech 67 dienen insbesondere zur Erhöhung der Stabilität und Verwindungssteifigkeit des Mittelarms 10.

Optional kann weiterhin ein Drehknopf 51 für einen Thermostaten vorgesehen sein. Der Drehknopf 51 ist vorzugsweise auf der Oberseite des Gehäuses 40 angeordnet, kann aber auch an anderen Positionen platziert sein. Zur Erhöhung der Dichtigkeit des Mittelarms 10 insbesondere gegenüber Fettrückständen, Wrasen oder dergleichen sind alle Öffnungen des Mittelarms 10, soweit es mechanisch realisierbar ist, durch Klappen, Blenden oder dergleichen abgedeckt. Beispielhaft ist im Schwenkbereich zwischen dem Stützabschnitt 12 und dem Halteabschnitt 13 eine Klappe 52 vorgesehen.

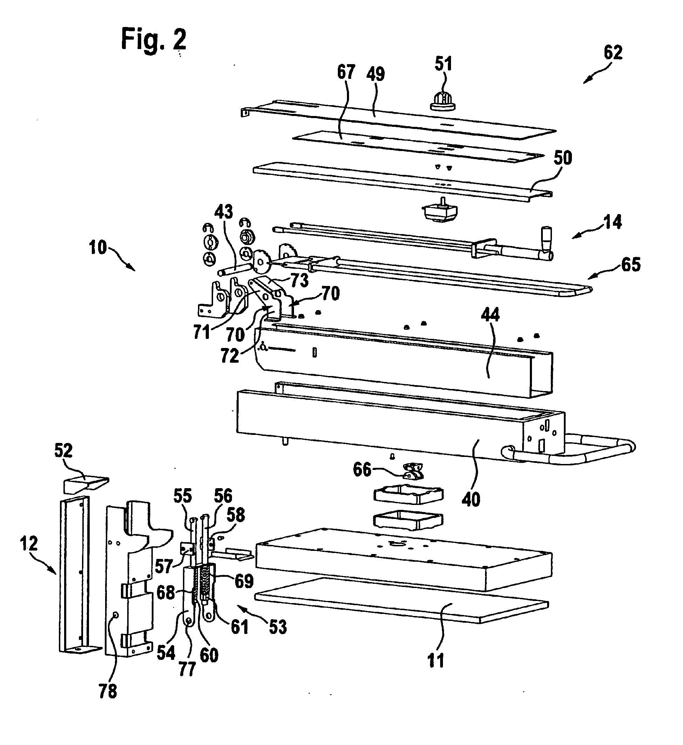

Bevorzugt ist innerhalb des Stützabschnittes 12 des Mittelarms 10 eine weitere Einrichtung 53 zur Gewichtsentlastung angeordnet (siehe hierzu Figur 2). Diese Einrichtung 53 zur Gewichtsentlastung umfasst einen Halter 54, vorzugsweise zwei Haltestangen 55, 56 und optional zwei Distanzstücke 57, 58. Der Halter 54 weist in einem nach oben weisenden Steg 59 zwei Öffnungen auf, durch die die Haltestangen 55, 56 hindurch geführt sind. Auf den Haltestangen 55, 56 sind (nur schematisch dargestellte) Federelemente 68, 69 angeordnet, wobei die Federelemente 68, 69 auf Abschnitten der Haltestangen 55, 56 sitzen, die innerhalb des Halters 54 liegen. Gesichert sind die Federelemente durch Abschluss- oder Anschlagelemente 60, 61. Die Anschlagelemente 60, 61 sind vorzugsweise als Schraubmuttern oder dergleichen ausgebildet, derart, dass über die Schraubmuttern die Vorspannung der Federelemente einstellbar ist. Mit den den Anschlagelementen 60, 61 gegenüber liegenden Enden der Haltestangen 55, 56, die aus dem Halter 54 nach oben heraus ragen, sind die Haltestangen 55, 56 jeweils an einem Anlenkelement 70 oder dergleichen angelenkt, wobei die beiden Anlenkelemente 70 durch eine Abdeckung 73 oder dergleichen miteinander verbunden sein können. Das hebelförmig ausgebildete Anlenkelement 70 ist auf der Schwenkachse 43 angeordnet und weist an den Enden des jeweils einen Schenkels 71 Aufnahmen für die Haltestangen 55, 56 auf. Das Ende des jeweils anderen Schenkels 72 ist innerhalb des Innengehäuses 44 auf diesem bzw. in diesem abgestützt. Zusätzlich können die Anlenkelemente 70 durch eine Abdeck- und/oder Führungsrampe 74 in dem Innengehäuse 44 beispielsweise durch Klemmung fixiert werden.

Der Halter 54 ist an dem bzw. in dem Stützabschnitt 12 angeordnet und mit diesem verbunden. Der Halter 54 weist dazu nach außen gerichtete Vorsprünge 77 oder dergleichen auf, die mit Öffnungen 78 in dem Stützabschnitt 12 korrespondieren. Anders ausgedrückt ist die Verbindung zwischen dem Halter 54 und dem Stützabschnitt 12 durch einen so genannten Durchzug hergestellt. Damit ist eine feste aber eine geringe Ausweichbewegung zulassende Verbindung geschaffen.

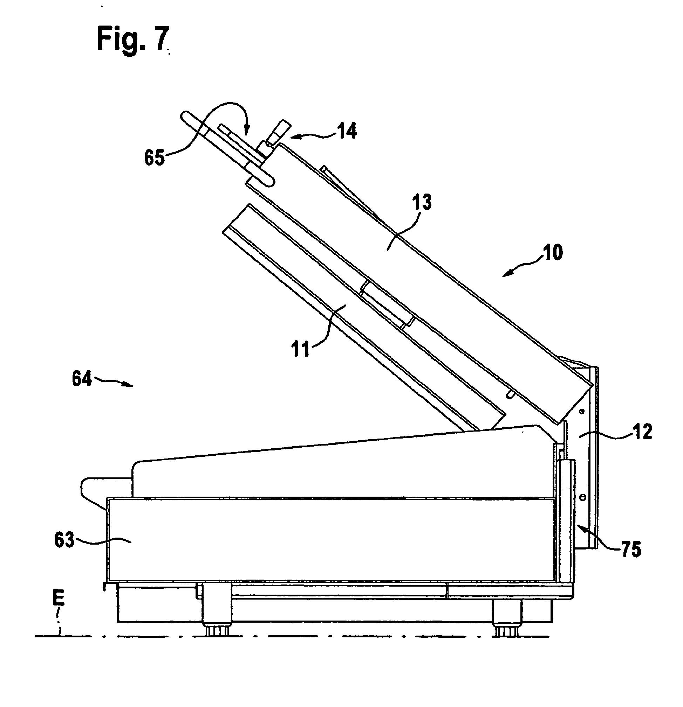

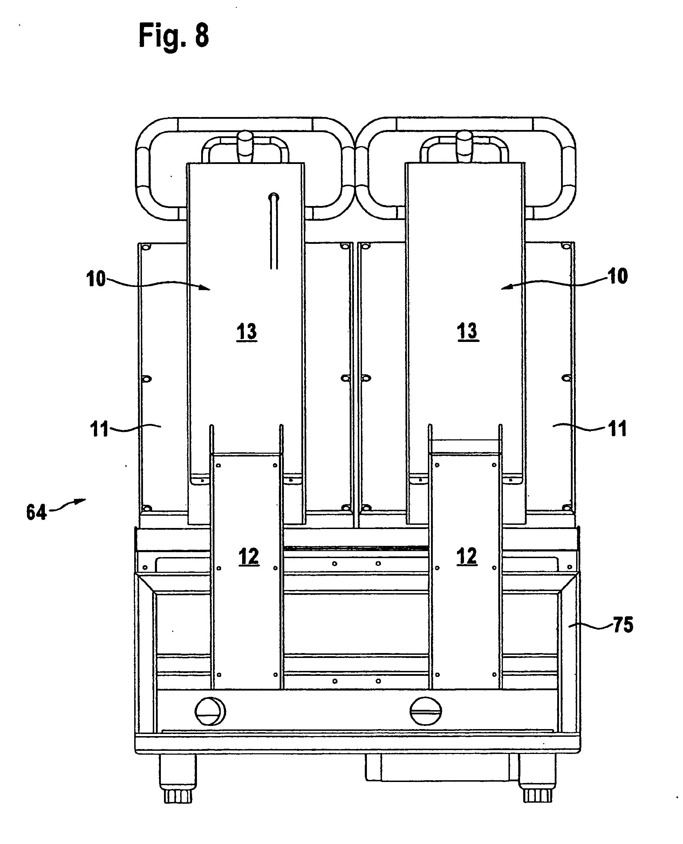

Wie z.B. der Figur 2 weiter zu entnehmen ist, ist der Mittelarm 10 mit einer Kontaktgrill- oder Bratoberplatte 11 versehen und bildet ein eigenständiges Grill- oder Bratgerät 62. Die Kontaktgrill- oder Bratoberplatte 11 kann fest oder beweglich, vorzugsweise über ein Kreuzgelenk 66 oder dergleichen, am Halteabschnitt 13 befestigt sein. Alternativ ist die Kontaktgrill- oder Bratoberplatte 11 aber mit einer Kontaktgrill- oder Bratunterplatte 63 zur Bildung eines Kontaktgrill- oder Bratgeräts 64 kombiniert (siehe Figur 7). Dabei ist die Kontaktgrill- oder Bratoberplatte 11 über den zuvor beschriebenen Mittelarm 10 schwenkbar an der Kontaktgrill- oder Bratunterplatte 63 angeordnet. Die Kontaktgrill- oder Bratoberplatte 11 kann auch geteilt ausgebildet sein. Anders ausgedrückt kann die Kontaktgrill- oder Bratoberplatte 11 aus mehreren Teilplatten gebildet sein, wobei jede Teilplatte über einen separaten und weiter oben beschriebenen Mittelarm 10 an der Kontaktgrill- oder Bratunterplatte 63 angelenkt ist (siehe Figur 8). Der Mittelarm 10 mit der oder jeder Kontaktgrill- oder Bratoberplatte 11 kann auch über einen Ständer 75 oder dergleichen der Kontaktgrill- oder Bratunterplatte 63 zugeordnet sein. Optional kann dem Mittelarm 10 auch eine Einrichtung 65 zur Fixierung des Halteabschnitts 13 gegenüber dem Stützabschnitt 12 zugeordnet sein. Die Einrichtung 65 (siehe z.B. Figur 2) ist im Halteabschnitt 13 des Mittelarms 10 angeordnet.

Um das Grill- bzw. Bratgut zwischen den Kontaktgrill- oder Bratplatten 11, 63 zu garen, muss der Druck der Kontaktgrill- oder Bratoberplatte 11 verstellbar sein, um in der Konsistenz und/oder den Abmessungen unterschiedliches Gargut nicht zu pressen oder zu zerdrücken. Über das Betätigungselement 19, also den Bedienhebel, der sich an der Stirnseite des Mittelarms 10 befindet, werden vorzugsweise drei Gewichtsentlastungsstufen eingestellt. Durch die Drehung am Bedienhebel wird das Stufenelement mit dem Schiebeelement 16 bewegt. Aufgrund des Steuerprofils mit den unterschiedlichen Raststufen 25 wird das Schiebeelement 16 in definierten Positionen fixiert. Die axiale Bewegung des Schiebeelementes 16 verändert den Federdruck. So kann der Federdruck erhöht oder reduziert werden, indem das Schiebeelement 16 in unterschiedlichen Positionen arretiert wird. Durch den Federdruck wird das Gewicht der Kontaktgrill- oder Bratoberplatte 11 über das an dem Stützabschnitt 12 gelagerte/befestigte Führungsmittel 15 abgefangen oder freigegeben. Die Arretierung der Raststange 27 kann alternativ auch über das Gehäuse 40 erfolgen, beispielsweise dann, wenn das Steuerprofil keine Raststufen 25 aufweist sondern ein Schräge ist.

## Patentansprüche

1. Mittelarm (10) zur Aufnahme einer Kontaktgrill- oder Bratoberplatte (11), wobei der Mittelarm (10) einen im Wesentlichen vertikalen Stützabschnitt (12) und einen schwenkbar am vertikalen Stützabschnitt (12) angeordneten Halteabschnitt (13), an dem die Kontaktgrill- oder Bratplatte (11) befestigbar ist, aufweist, und in dem Halteabschnitt (13) eine Einrichtung (14) zur Gewichtsentlastung für die dem Halteabschnitt (13) zuzuordnende Kontaktgrill- oder Bratoberplatte (11) angeordnet ist, wobei die Einrichtung (14) zur Gewichtsentlastung mindestens ein an einem Ende (21) zur schwenkbaren Lagerung ausgebildetes und eingerichtetes Führungsmittel (15), auf dem ein Schiebeelement (16) bewegbar angeordnet ist, ein auf dem freien Ende (22) des Führungsmittels (15) angeordnetes und durch ein Anschlagmittel (17) zwischen dem Schiebeelement (16) und dem Anschlagmittel (17) gesichertes Rückstellelement (18), sowie eine mittels eines Betätigungselementes (19) bedienbare Verstelleinrichtung (20) zur Veränderung des Abstands zwischen dem Schiebeelement (16) und dem Anschlagmittel (17) in Längsrichtung des Führungsmittels (15), umfasst, **dadurch gekennzeichnet, dass** die Verstelleinrichtung (20) ein Steuerprofilelement (23) umfasst, das ein Steuerprofil zur Herbeiführung einer Axialbewegung des Schiebeelementes (16) in Längsrichtung des Führungsmittels (15) aufweist.

2. Mittelarm nach Anspruch 1, **dadurch gekennzeichnet, dass** das Steuerprofil eine in Axialrichtung des Führungsmittels (15) verlaufende Steuerkurve aufweist.

3. Mittelarm nach Anspruch 1 oder 2, **dadurch gekennzeichnet, dass** das Steuerprofilelement (23) ein Stufenelement mit mindestens zwei Raststufen (25) ist, wobei die Raststufen (25) in Längsrichtung des Führungsmittels (15) axial versetzt zueinander sind, und dass die Verstelleinrichtung (20) eine Fixiereinrichtung (26) umfasst, wobei die Fixiereinrichtung (26) mindestens einen Rastbolzen (28) aufweist, der zu den Raststufen (25) des Stufenelementes korrespondiert.

4. Mittelarm nach Anspruch 3, **dadurch gekennzeichnet, dass** das Stufenelement rohrförmig ausgebildet und fest mit dem Schiebeelement (16) verbunden ist.

5. Mittelarm nach Anspruch 3 oder 4, **dadurch gekennzeichnet, dass** die Fixiereinrichtung (26) eine Raststange (27) umfasst, an deren einem Ende (29) der Rastbolzen (28) und an dem gegenüber liegenden Ende (35) das Betätigungselement (19) angeordnet ist.

6. Mittelarm nach einem der Ansprüche 1 bis 5, **dadurch gekennzeichnet, dass** das Führungsmittel (15) zwei Führungsstangen (33, 34) umfasst, so dass das Schiebeelement (16) auf zwei Führungsstangen (33, 34) geführt ist.

7. Mittelarm nach einem der Ansprüche 1 bis6, **dadurch gekennzeichnet, dass** das Schiebeelement (16) eine zentrale Öffnung (30) aufweist.

8. Mittelarm nach Anspruch 7, **dadurch gekennzeichnet, dass** die Raststange (27) durch das Schiebeelement (16) und das Stufenelement hindurch geführt ist, derart, dass sich die Längsachse L_{R} der Raststange (27) etwa parallel zur Längsachse L_{F} der Führungsstangen (33, 34) erstreckt und sich das den Rastbolzen (28) aufweisende Ende (29) der Raststange (27) auf der dem Schiebeelement (16) abgewandten Seite des Stufenelementes befindet.

9. Mittelarm nach einem der Ansprüche 5 bis 8, **dadurch gekennzeichnet, dass** die Raststange (27) unter Bildung eines Anschlags (36) gestuft ausgebildet ist, wobei auf einem Abschnitt (38) der Raststange (27) ein Federelement (39) angeordnet ist, derart, dass das Federelement (39) zwischen dem Anschlag (36) und dem Schiebeelement (16) liegt.

10. Mittelarm nach einem der Ansprüche 5 bis 9, **dadurch gekennzeichnet, dass** die Raststange (27) an dem dem Rastbolzen (28) gegenüber liegenden Ende (35) zur drehbaren Lagerung ausgebildet und eingerichtet ist.

11. Mittelarm nach einem der Ansprüche 5 bis 10, **dadurch gekennzeichnet, dass** das Betätigungselement (19) ein Bedienhebel zur Ausübung einer Drehbewegung der Raststange (27) um eine Drehachse R, die parallel zur Längsachse L_{F} der Führungsstangen (33, 34) verläuft, ist.

12. Mittelarm (10) nach einem der Ansprüche 1 bis 11 mit einer Kontaktgrill- oder Bratoberplatte (11).

13. Mittelarm nach einem der Ansprüche 1 bis 12, **dadurch gekennzeichnet, dass** innerhalb des Stützabschnitts (12) des Mittelarms (10) eine weitere Einrichtung (53) zur Gewichtsentlastung angeordnet ist.

14. Kontaktgrill- oder Bratgerät (64) mit mindestens einer Kontaktgrill- oder Bratoberplatte (11) und einer Kontaktgrill- oder Bratunterplatte (63), wobei die oder jede Kontaktgrill- oder Bratoberplatte (11) über einen Mittelarm (10) schwenkbar an der Kontaktgrill- oder Bratunterplatte (63) angeordnet ist, **dadurch gekennzeichnet, dass** der Mittelarm (10) nach einem der Ansprüche 1 bis 13 ausgebildet ist.

15. Kontaktgrill- oder Bratgerät (64) nach Anspruch 14, **dadurch gekennzeichnet, dass** der Kontaktgrill- oder Bratunterplatte (63) mindestens zwei Kontaktgrill- oder Bratoberplatten (11) zugeordnet sind, wobei jede Kontaktgrill- oder Bratoberplatte (11) mit einem separaten Mittelarm (10) an der gemeinsamen Kontaktgrill- oder Bratunterplatte (63) schwenkbar angeordnet ist.

## Claims

1. Centre arm (10) for holding an upper contact grilling or roasting plate (11), the centre arm (10) having a substantially vertical supporting section (12) and a holding section (13) which is arranged pivotably on the vertical supporting section (12) and to which is attached the contact grilling or roasting plate (11), and in the holding section (13) being arranged a device (14) for weight relief for the upper contact grilling or roasting plate (11) to be fitted on the holding section (13), the device (14) for weight relief including at least one guide means (15) which is constructed and designed at one end (21) for pivotable mounting and on which is movably arranged a sliding element (16), a return element (18) arranged on the free end (22) of the guide means (15) and secured by a stop means (17) between the sliding element (16) and the stop means (17), and also an adjusting device (20) which can be actuated by means of an actuating element (19) for varying the distance between the sliding element (16) and the stop means (17) in the longitudinal direction of the guide means (15), **characterised in that** the adjusting device (20) includes a control profile element (23) which has a control profile for bringing about an axial movement of the sliding element (16) in the longitudinal direction of the guide means (15).

2. Centre arm according to claim 1, **characterised in that** the control profile has a control curve running in the axial direction of the guide means (15).

3. Centre arm according to claim 1 or 2, **characterised in that** the control profile element (23) is a stepped element having at least two latch steps (25), the latch steps (25) being axially offset from each other in the longitudinal direction of the guide means (15), and that the adjusting device (20) includes a fixing device (26), the fixing device (26) having at least one latch bolt (28) which corresponds to the latch steps (25) of the stepped element.

4. Centre arm according to claim 3, **characterised in that** the stepped element is tubular and rigidly connected to the sliding element (16).

5. Centre arm according to claim 3 or 4, **characterised in that** the fixing device (26) includes a latch rod (27) at one end (29) of which is arranged the latch bolt (28) and at the opposite end (35) of which is arranged the actuating element (19).

6. Centre arm according to any one of claims 1 to 5, **characterised in that** the guide means (15) includes two guide rods (33, 34), so that the sliding element (16) is guided on two guide rods (33, 34).

7. Centre arm according to any one of claims 1 to 6, **characterised in that** the sliding element (16) has a central opening (30).

8. Centre arm according to claim 7, **characterised in that** the latch rod (27) is passed through the sliding element (16) and the stepped element, in such a way that the longitudinal axis L_{R} of the latch rod (27) extends approximately parallel to the longitudinal axis L_{F} of the guide rods (33, 34), and the end (29) of the latch rod (27) which has the latch bolt (28) is located on the side of the stepped element facing away from the sliding element (16).

9. Centre arm according to any one of claims 5 to 8, **characterised in that** the latch rod (27) is stepped, forming a stop (36), wherein on a section (38) of the latch rod (27) is arranged a spring element (39), in such a way that the spring element (39) is located between the stop (36) and the sliding element (16).

10. Centre arm according to any one of claims 5 to 9, **characterised in that** the latch rod (27) is constructed and designed for rotatable mounting at the end (35) opposite the latch bolt (28).

11. Centre arm according to any one of claims 5 to 10, **characterised in that** the actuating element (19) is a control lever for performing a rotating movement of the latch rod (27) about an axis of rotation R which runs parallel to the longitudinal axis L_{F} of the guide rods (33, 34).

12. Centre arm (10) according to any one of claims 1 to 11 having an upper contact grilling or roasting plate (11).

13. Centre arm according to any one of claims 1 to 12, **characterised in that** within the supporting section (12) of the centre arm (10) is arranged a further device (53) for weight relief.

14. Contact grilling or roasting device (64) having at least one upper contact grilling or roasting plate (11) and a lower contact grilling or roasting plate (63), the or each upper contact grilling or roasting plate (11) being arranged pivotably on the lower contact grilling or roasting plate (63) by a centre arm (10), **characterised in that** the centre (10) is designed according to any one of claims 1 to 15.

15. Contact grilling or roasting device (64) according to claim 14, **characterised in that** associated with the lower contact grilling or roasting plate (63) are at least two upper contact grilling or roasting plates (11), each upper contact grilling or roasting plate (11) being pivotably arranged with a separate centre arm (10) on the common lower contact grilling or roasting plate (63).

## Revendications

1. Bras médian (10) pour recevoir une plaque (11) de grill par contact ou plaque à rôtir supérieure, le bras médian (10) présentant un tronçon (12) d'appui essentiellement vertical et un tronçon (13) de maintien, prévu pour pivoter sur le tronçon (12) d'appui vertical, sur lequel plaque (11) de grill par contact ou plaque à rôtir supérieure peut être fixée, et un dispositif (14) de délestage pondéral étant prévu dans le tronçon (13) de maintien pour la plaque (11) de grill par contact ou plaque à rôtir supérieure affectée au tronçon (13) de maintien, le dispositif (14) de délestage pondéral comprenant au moins un moyen (15) de guidage, façonné et disposé pour pivoter à une extrémité (21), sur lequel un élément coulissant (16) est prévu pour pivoter, un élément (18) de rappel prévu sur l'extrémité libre (22) du moyen (15) de guidage et sécurisé par un moyen (17) de butée entre l'élément coulissant (16) et le moyen (17) de butée, et un dispositif (20) de déplacement actionnable au moyen d'un élément (19) de manoeuvre pour modifier l'écart entre l'élément coulissant (16) et le moyen (17) de butée dans le sens longitudinal du moyen (15) de guidage, **caractérisé en ce que** le dispositif (20) de déplacement comprend un élément (23) à profil de commande présentant un profil de commande pour générer un mouvement axial de l'élément coulissant (16) dans le sens longitudinal du moyen (15) de guidage.

2. Bras médian selon la revendication 1, **caractérisé en ce que** le profil de commande présente une courbe de commande s'étendant dans le sens axial du moyen (15) de guidage.

3. Bras médian selon la revendication 1 ou 2, **caractérisé en ce que** l'élément (23) à profil de commande est un élément à gradins avec aux moins deux gradins crantés (25), les gradins crantés (25) étant axialement décalés l'un par rapport à l'autre dans le sens longitudinal du moyen (15) de guidage et le dispositif (20) de déplacement comprenant un dispositif (26) de fixation, le dispositif (26) de fixation présentant au moins un goujon cranté (28) qui coïncide avec les gradins crantés (25) de l'élément à gradins.

4. Bras médian selon la revendication 3, **caractérisé en ce que** l'élément à gradins est en forme de tube et fixé à l'élément coulissant (16).

5. Bras médian selon la revendication 3 ou 4, **caractérisé en ce que** le dispositif (26) de fixation comprend une tringle crantée (27) à l'extrémité (29) de laquelle le goujon cranté (28) est disposé et à l'extrémité opposée (35) de laquelle l'élément (19) de manoeuvre est disposé.

6. Bras médian selon l'une des revendications 1 à 5, **caractérisé en ce que** le moyen de (15) guidage comprend deux tringles (33, 34) de guidage, de sorte que l'élément coulissant (16) soit guidé sur deux tringles (33, 34) de guidage.

7. Bras médian selon l'une des revendications 1 à 6, **caractérisé en ce que** l'élément coulissant (16) présente une ouverture centrale (30).

8. Bras médian selon la revendication 7, **caractérisé en ce que** la tringle crantée (27) est guidée à travers l'élément coulissant (16) et l'élément à gradins, de sorte que l'axe longitudinal L_{R} de la tringle crantée (27) soit à peu près parallèle à l'axe longitudinal L_{F} des tringles de guidage (33, 34) et que l'extrémité (29) de la tringle crantée (27) présentant le goujon cranté (28) se trouve sur la face de l'élément à gradins non tournée vers l'élément coulissant (16).

9. Bras médian selon l'une des revendications 5 à 8, **caractérisé en ce que** la tringle crantée (27) présente un gradin constitué par une butée (36), un élément (39) à ressort étant prévu sur un tronçon (38) de la tringle crantée (27), de sorte que l'élément (39) à ressort se trouve entre la butée (36) et l'élément coulissant (16).

10. Bras médian selon l'une des revendications 5 à 9, **caractérisé en ce que** la tringle crantée (27) est façonnée et disposée pour pivoter à l'extrémité (35) opposée au goujon cranté (28).

11. Bras médian selon l'une des revendications 5 à 10, **caractérisé en ce que** l'élément (19) de manoeuvre est un levier de commande pour exercer un mouvement de rotation de la tringle crantée (27) autour d'un axe de rotation R qui s'étend parallèlement à l'axe longitudinal L_{F} des tringles de guidage (33, 34).

12. Bras médian selon l'une des revendications 1 à 11 avec une plaque (11) de grill par contact ou plaque à rôtir supérieure.

13. Bras médian selon l'une des revendications 1 à 12, **caractérisé en ce qu'**un autre dispositif (53) de délestage pondéral est prévu sur le tronçon (12) d'appui du bras médian (10).

14. Appareil (64) à griller par contact ou à rôtir avec au moins une plaque (11) de grill par contact ou plaque à rôtir supérieure et une plaque (63) à griller par contact ou plaque à rôtir inférieure, la ou chaque plaque (11) de grill par contact ou plaque à rôtir supérieure étant prévue pour pivoter via un bras médian (10) sur la plaque (63) de grill par contact ou plaque à rôtir inférieure, **caractérisé en ce que** le bras médian (10) est exécuté selon l'une des revendications 1 à 13.

15. Appareil (64) à griller par contact ou à rôtir selon la revendication 14, **caractérisé en ce qu'**au moins deux plaques (11) de grill par contact ou plaques à rôtir supérieures sont affectées à la plaque (63) de grill par contact ou plaque à rôtir inférieure, chaque plaque (11) de grill par contact ou plaque à rôtir supérieure étant prévu pour pivoter avec un bras médian (10) séparé sur la plaque (63) de grill par contact ou plaque à rôtir inférieure commune.
